# DEMANDE DE BREVET EUROPEEN

(11) **EP 2 650 584 A1**
(43) Date de publication de la demande: **16.10.2013**
(21) Numéro de dépôt: 13161306.9
(22) Date de dépôt: 27.03.2013
(51) Int. Cl.: F16M 11/20

(54) **Bras articulé notamment pour appareil électrique et une installation pour appareil électrique**

(30) Priorité: 10.04.2012 FR 1253260
(71) Demandeur: Maquet SAS, 45160 Ardon (FR)
(72) Inventeur: Changeux, Patrice, 45600 Guilly (FR); Brillant, Laurent, 41210 Neung Sur Beuvron (FR)
(74) Mandataire: Prugneau, Philippe

(57) **Abrégé**

Un bras articulé (1), comportant des premier et second montants (2, 3) coplanaires comportant des première et seconde portion dentées (510) engrenées entre elles et séparés par une pièce intermédiaire (4) avec laquelle chacun est relié par une première, seconde liaison pivot de premier, second axes (A1, A2), ladite pièce intermédiaire (4) étant monobloc et présentant un corps central (40) solidaire d'une première et d'une seconde tige (41, 42) définissant lesdits premier et second axes (A1, A2), lesdites première et seconde tiges (42) étant séparées par une ouverture (45) traversant le corps central (40) et apte à recevoir le passage d'un câble (6) isolé desdites première et seconde portions dentées (510) par le contour fermé de l'ouverture (45). Une installation pour appareil électrique comportant un support portant au moins un tel bras articulé (1) dont l'extrémité libre est pourvue d'un appareil électrique relié par un câble (6).

## Description

### Domaine technique

L'invention concerne un bras articulé notamment pour appareil électrique, comportant au moins des premier et second montants coplanaires séparés par une pièce intermédiaire avec laquelle chacun est relié respectivement par une première, seconde liaison pivot autorisant leurs pivotements relatifs autour de premier, second axes parallèles entre eux, les premier et second montants comportant respectivement des première et seconde portions dentées, circulaires pivotant autour des premier et second axes et agencées pour engrener entre elles.

L'invention concerne également une installation pour appareil électrique comportant un support portant au moins un bras articulé dont l'extrémité libre est pourvue d'un appareil électrique, notamment un appareil d'éclairage, alimenté électriquement par un câble.

### Technique antérieure

Ce type de bras articulé est par exemple destiné à être utilisé pour suspendre un appareil électrique équipant un bloc opératoire médical. Ce bras articulé est généralement associé à d'autres bras articulés, chacun supportant un autre appareil électrique. Ces appareils électriques peuvent atteindre un poids de plusieurs dizaines de kilogrammes. Aussi, pour le personnel médical, il est important de pouvoir déplacer les appareils électriques, facilement et précisément dans l'espace vers différentes positions. Ces bras articulés sont généralement conçus pour autoriser des déplacements verticaux et horizontaux combinés. A cet effet, chaque bras articulé peut comporter un bras d'extension destiné à pivoter dans un plan horizontal par rapport à un support fixe, et un bras de compensation couplé au bras d'extension et destiné à pivoter dans un plan vertical par rapport au bras d'extension. L'extrémité libre du bras de compensation porte l'appareil électrique qui, par les pivotements combinés des bras d'extension et de compensation, peut ainsi être déplacée et positionnée dans l'espace. Le bras de compensation est par exemple couplé au bras d'extension par une liaison pivot. Pour autoriser un débattement de 360° du bras de compensation par rapport au bras d'extension, il est donc nécessaire de disposer les extrémités du bras d'extension et du bras de compensation, liées par liaison pivot, dans des plans horizontaux différents. Un tel bras articulé, dont un exemple est notamment présenté dans la publication DE 196 53 507, est donc encombrant en hauteur et gêne le personnel médical. De plus, la liaison pivot de ce bras articulé comporte un contacteur tournant assurant l'alimentation électrique de l'appareil électrique porté par le bras articulé. Or, cette technologie est onéreuse, en particulier lorsqu'il est nécessaire de transmettre au moins un courant électrique d'alimentation (puissance) et au moins deux signaux distincts pouvant être de haute fréquence de l'ordre de quelques Giga Hertz, ce qui est le cas pour certains appareils électriques utilisés dans les blocs opératoires.

On connait également, de la publication GB 460,441, un bras articulé comportant des premier et second montants coplanaires séparés par deux plaques hautes et par deux plaques basses prévues dans des plans horizontaux, les plaques hautes étant disposées en regard des plaques basses. Chaque plaque haute est couplée aux premier et second montants par deux boulons, un boulon par premier, second montant. De même, chaque plaque basse est couplée aux premier et second bras par deux boulons, un boulon par premier, second montant. Ainsi, le couple de boulons liés au premier montant définit une première liaison pivot et le couple de boulons liés au second montant définit une seconde liaison pivot. Le bras articulé comporte ainsi deux liaisons pivot entre lesquelles passe un câble d'alimentation d'un appareil électrique porté à l'extrémité du bras articulé. Les premier et second montants du bras articulé comportent de plus des portions circulaires dentées, coaxiales aux liaisons pivot et engrenant l'une avec l'autre. Comme le bras articulé précédent, ce bras articulé permet également un débattement de 360°, mais ici tout en conservant les premier et second montants dans un même plan horizontal. L'encombrement en hauteur du bras articulé est donc limité. Toutefois, lors du pivotement des premier et second montants, il y a des risques importants de coincement du câble, ce qui nuit de manière préjudiciable pour l'intervention médicale à la fiabilité de l'alimentation électrique.

On connait enfin la publication WO 2008/112 687 qui décrit un bras articulé dont les deux montants sont reliés par une pièce monobloc portée par des tiges avec laquelle elles sont en liaison pivot.

### Exposé de l'invention

Le but de l'invention est de proposer une alternative de bras articulé autorisant un pivotement de 360°, de conception sirrple et robuste, présentant un encombrement en hauteur limité, supprimant les risques de coincement du câble et garantissant ainsi une alimentation en énergie, par exemple électrique, et/ou une transmission de signaux fiables.

A cet effet, l'invention a pour objet un bras articulé notamment pour appareil électrique, comportant au moins des premier et second montants coplanaires séparés par une pièce intermédiaire avec laquelle chacun est relié respectivement par une première, seconde liaison pivot autorisant leur pivotement relatif autour de premier, second axes parallèles entre eux, les premier et second montants comportant respectivement des première et seconde portions dentées, circulaires, pivotant autour des premier et second axes et agencées pour engrener entre elles, le bras articulé comportant un câble passant du premier montant au second montant jusqu'à l'appareil électrique, **caractérisé en ce que** la pièce intermédiaire est monobloc et présente un corps central solidaire d'une première et d'une seconde tige définissant les premier et second axes, les première et seconde tiges étant séparées par une ouverture à contour fermé traversant le corps central, en ce que le câble traverse l'ouverture de la pièce intermédiaire monobloc de sorte que le câble soit isolé des première et seconde portions dentées par le contour fermé de l'ouverture. Le câble est par exemple un câble d'alimentation électrique ou un câble de transmission de signaux, par exemple de signaux « haute fréquence » tels que des signaux vidéo HD, des signaux informatiques.

L'idée à la base de l'invention est de prévoir une pièce intermédiaire monobloc traversée par une ouverture à contour fermé permettant, en toute configuration, de s'assurer que le câble n'est pas en contact avec les portions dentées. Le bras articulé selon l'invention permet d'utiliser une alimentation électrique et/ou une transmission des signaux par câble, plus fiable que les contacteurs tournants.

Le bras articulé selon l'invention peut avantageusement présenter les particularités suivantes :
- l'ouverture présente une forme oblongue dont la longueur est orientée du premier au second axe, perpendiculairement aux premier et second axes ;
- l'entraxe séparant les premier et second axes est au moins égal à la somme des demi-largeurs des premiers et second montants pour autoriser le pivotement du second montant par rapport au premier montants entre deux positions extrêmes séparées d'un angle de 360° ;
- chaque premier, second montant comporte respectivement une paire de premières, secondes portées femelles cylindriques et coaxiales entre elles, les extrémités des première et seconde tiges étant agencées pour dépasser de part et d'autre du corps central et définir respectivement des premières et secondes portées mâles cylindriques et coaxiales entre elles et aptes à coopérer avec les portées femelles pour définir les premier et second axes ;
- la première portion dentée comporte l'une des premières portées femelles et la seconde portion dentée comporte l'une des secondes portées femelles ;
- le bras articulé comporte des premier, second roulements prévus entre chaque première, seconde portée mâles et la première, seconde portée cylindrique femelle correspondante ;
- le bras articulé comporte un premier carter de protection solidaire du premier montant et un second carter de protection solidaire du second carter, chaque premier, second carter étant agencé pour entourer les premier, second roulements et les isoler de l'extérieur du bras articulé ;
- le bras articulé comporte un carter central de protection solidaire de la pièce intermédiaire et agencé pour entourer les première et seconde portions dentées et les isoler de l'extérieur du bras articulé ;
- le bras articulé comporte des moyens de friction prévus entre la pièce intermédiaire et au moins l'un des premier, second montants, agencés pour freiner le pivotement respectivement du premier, second montants par rapport à la pièce intermédiaire de sorte à le rendre fluide et régulier.

L'invention s'étend à une installation pour appareil électrique comportant un support portant au moins un bras articulé dont l'extrémité libre est pourvue d'un appareil électrique, notamment un appareil d'éclairage relié par un câble, **caractérisée en ce qu'**elle comporte un bras articulé tel que décrit ci-dessus.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue en coupe d'une partie du bras articulé selon l'invention illustrant notamment le premier montant faisant office de bras d'extension, le second montant et la pièce intermédiaire ;
- la figure 2 est une vue en perspective d'une partie du bras articulé de la figure 1 comportant un troisième montant faisant office de bras de compensation ;
- la figure 3 est une vue frontale de la pièce intermédiaire du bras articulé des figures 1 et 2 ;
- la figure 4 est une vue de dessus d'une partie du bras articulé des figures 1 et 2 illustrant les portions circulaires dentées des premier et second montants ;
- la figure 5 est un schéma de dessus d'une installation pour appareil électrique comportant plusieurs bras articulé, l'un de ces bras articulés étant représenté avec ses premier et second montants dans différentes positions d'un même plan horizontal.

### Description des modes de réalisation

De manière non limitative, le bras articulé selon l'invention est par exemple destiné à être utilisé, fixé à un support suspendu au plafond d'un bloc opératoire pour supporter un appareil électrique tel que par exemple un appareil d'éclairage, une caméra, un support d'écran plat, un écran de contrôle ou tout autre équipement adapté.

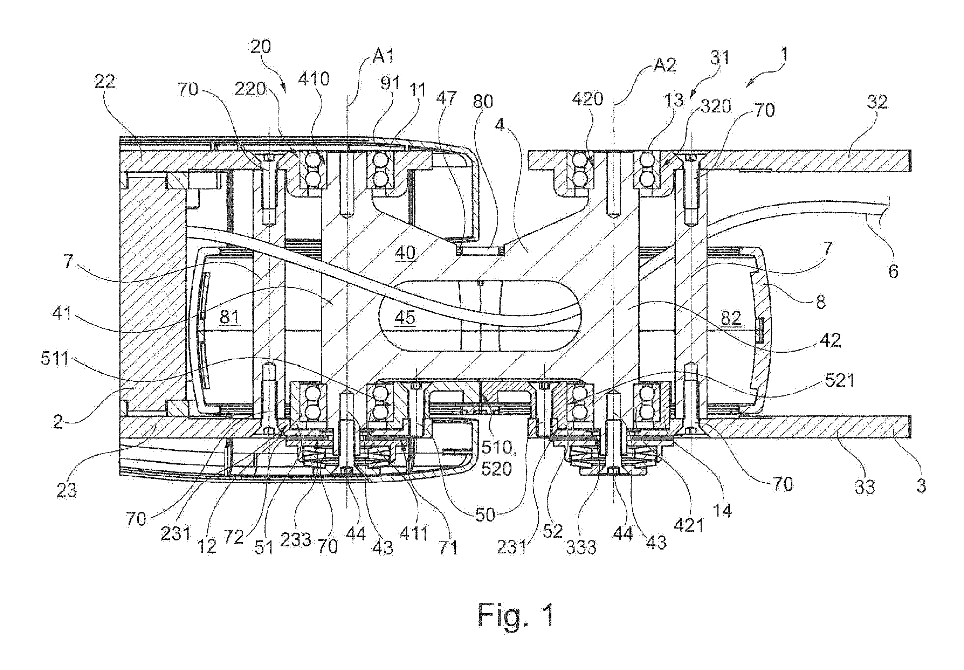

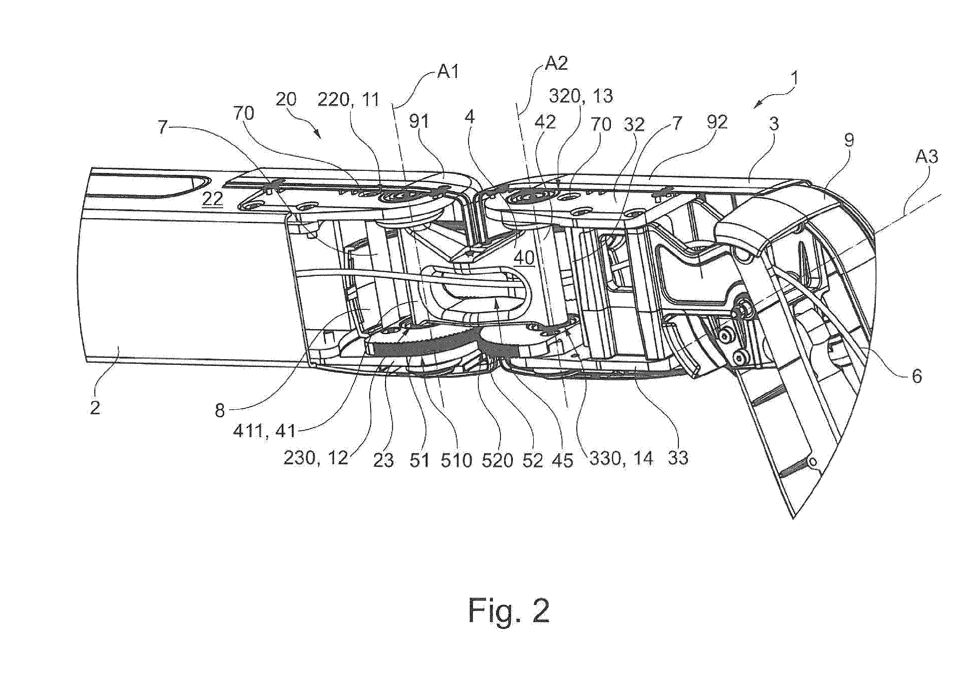

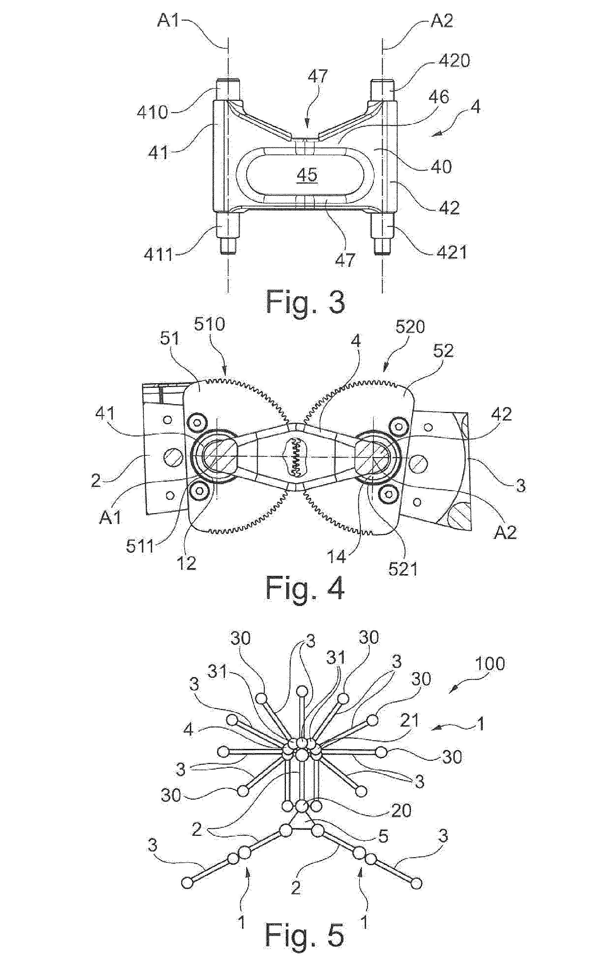

En référence aux figures 1 et 2, le bras articulé 1 comporte un premier montant 2 et un second montant 3 coplanaires séparés par une pièce intermédiaire 4. Une première extrémité 20 du premier montant 2 (visible sur la figure 5) est destinée à être fixée par exemple à un support vertical 5 (schématisé sur la figure 5) suspendu au plafond du bloc opératoire et apte à recevoir les premières extrémités 20 de plusieurs premiers montants 2. La fixation de la première extrémité 20 du premier montant 2 au support 5 est généralement prévue de sorte que le premier montant 2 soit sensiblement horizontal. Le premier montant 2 peut être prévu pivotant par rapport au support 5 par l'intermédiaire d'une liaison pivot (non représentée). La seconde extrémité 21 du premier montant 2 est couplée à la pièce intermédiaire 4 par une première liaison pivot autorisant le pivotement relatif entre le premier montant 2 et la pièce intermédiaire 4 autour d'un premier axe A1 vertical. Une première extrémité 30 (visible sur la figure 5) du second montant 3 porte l'appareil électrique (non représenté), fixé par tout moyen adapté à cette première extrémité 30. La seconde extrémité 31 du second montant 3 est couplée à la pièce intermédiaire 4 par une seconde liaison pivot autorisant le pivotement relatif entre le second montant 3 et la pièce intermédiaire 4 autour d'un second axe A2 vertical. Ainsi, les pivotements relatifs entre le premier montant 2, le second montant 3 et la pièce intermédiaire 4 interviennent dans un même plan, ici horizontal.

Comme détaillé sur la figure 3, la pièce intermédiaire 4 est monobloc. Elle est par exemple réalisée en métal forgé. Elle comporte un corps central 40 allongé, solidaire d'une première tige 41 et d'une seconde tige 42, s'étendant perpendiculairement à la longueur du corps central 40 et parallèlement entre elles. Les extrémités de chaque première et seconde tige 41, 42 s'étendent en hauteur, de part et d'autre du corps central 40. L'extrémité supérieure de la première tige 41 définit une première portée mâle 410 supérieure, cylindrique autour du premier axe A1. L'extrémité inférieure de la première tige 41 définit une première portée mâle 411 inférieure cylindrique autour du premier axe A1. Les premières portées mâles 410, 411 supérieure et inférieure sont donc coaxiales entre elles. Dans l'exemple illustré, elles présentent de plus un même diamètre. La première portée mâle 410 supérieure reçoit la bague intérieure d'un premier roulement 11 supérieur. La première portée mâle 411 inférieure reçoit la bague intérieure d'un premier roulement 12 inférieur. L'extrémité supérieure de la seconde tige 42 définit une seconde portée mâle 420 supérieure, cylindrique autour du second axe A2. L'extrémité inférieure de la seconde tige 42 définit une seconde portée mâle 421 inférieure, cylindrique autour du second axe A2. Les secondes portées mâles 420, 421 supérieure et inférieure sont donc coaxiales entre elles. Dans l'exemple illustré, elles présentent de plus un même diamètre. La seconde portée mâle 420 supérieure reçoit la bague intérieure d'un second roulement 13 supérieur. La seconde portée mâle 421 inférieure reçoit la bague intérieure d'un second roulement 14 inférieur. Les extrémités inférieures des première et seconde tiges 41, 42 sont chacune percées par un orifice fileté 43 (visibles sur la figure 1) apte à recevoir une vis intermédiaire 44 pour solidariser la pièce intermédiaire 4 respectivement au premier, second montant 2, 3. Vue de dessus, la pièce intermédiaire 4 présente une forme de losange dont les pointes forment les première et seconde tiges 41, 42. Cette forme confère robustesse et fiabilité à la pièce intermédiaire 4.

En référence en particulier à la figure 3, le corps central 40 est traversé dans sa largeur par une ouverture 45 de forme oblongue, dont la longueur est orientée dans la même direction que la longueur du corps central 40 entre les première et seconde tiges 41, 42. L'ouverture 45 définit ainsi une barre supérieure 46 délimitant sa partie supérieure et une barre inférieure 47 délimitant sa partie inférieure. Cette ouverture 45 à contour fermé est apte à recevoir le passage d'un câble 6, par exemple un câble d'alimentation électrique ou un câble de transmission de signaux, passant du premier montant 2 au second montant 3. Ce câble, lorsqu'il est électrique, permet notamment la transmission de nombreux signaux « haute fréquence » tels que des signaux vidéo HD, des signaux informatiques. Le contour fermé de l'ouverture 45 permet d'éviter que le câble 6 ne sorte de l'ouverture 45. La position du câble 6 étant contrôlée par l'ouverture 45, le câble 6 est préservé de tout coincement lors des pivotements du premier montant 2, du second montant 3 et de la pièce intermédiaire 4. La partie supérieure de la barre supérieure 46 de la pièce intermédiaire 4 présente une forme en V dont la pointe, orientée vers l'ouverture 45 comporte un décrochement formant un logement de fixation 47 apte à recevoir la languette de fixation 80 (visible sur la figure 1) d'un carter central de protection 8 décrit plus loin

Chaque premier, second montant 2, 3 comporte respectivement une première, seconde plaque supérieure 22, 32 et une première, seconde plaque inférieure 23, 33 s'étendant parallèlement entre elles dans des plans sensiblement horizontaux. Chaque première, seconde plaque supérieure 22, 32 des premier et second montants 2, 3 comporte un premier, second alésage supérieur définissant respectivement une première, seconde portée femelle 220, 320 supérieure. Les première et seconde portées femelles 220, 320 supérieures sont cylindriques et reçoivent respectivement la bague extérieur des premier et second roulements 11, 13 supérieurs dont la bague intérieure est portée par l'extrémité supérieure de la première, seconde tige 41, 42 de la pièce intermédiaire 4. L'extrémité supérieure de la première tige 41 est ainsi guidée par rapport au premier montant 2 par une première liaison pivot, autour du premier axe A1. De même, l'extrémité supérieure de la seconde tige 42 est ainsi guidée par rapport au second montant 3 par une seconde liaison pivot, autour du second axe A2. Ainsi, le second montant 3 est apte à pivoter par rapport à la pièce intermédiaire 4 elle-même apte à pivoter dans le même plan, ici horizontal, par rapport au premier montant 2.

Les plaques inférieures 23, 33 des premier et second montants 2, 3 comportent chacune un premier, second lamage 231, 331 (visibles sur la figure 1) logeant une première, seconde couronne 51, 52 portant respectivement une première, seconde portion dentée 510, 520. Les première et seconde portions dentées 510, 520 sont circulaires et coaxiale respectivement avec les premier, second axes A1, A2. Comme illustré sur la figure 4, et en particulier sur la zone centrale en coupe partielle, les premières et secondes portions dentées 510, 520, ainsi disposées en regard l'une de l'autre, engrènent l'une avec l'autre. Chaque première, seconde couronne 51, 52 est solidaire respectivement de la première, seconde plaque inférieure 23, 33 par l'intermédiaire d'une vis de couronne 50. Chaque première, seconde couronne 51, 52 comporte un premier, second alésage inférieur définissant respectivement une première, seconde portée femelle 511, 521 inférieure, cylindrique, recevant respectivement la bague extérieure du premier, second roulement 12, 14 inférieur dont la bague intérieure correspondante est portée par l'extrémité inférieure de la première, seconde tige 41, 42 de la pièce intermédiaire 4. L'extrémité inférieure de la première tige 41 est ainsi guidée par rapport au premier montant 2 par la première liaison pivot, autour du premier axe A1. De même, l'extrémité inférieure de la seconde tige 42 est ainsi guidée par rapport au second montant 3 par la seconde liaison pivot, autour du second axe A2.

La figure 5 illustre une installation 100 pour appareils électriques (non représentés) tels que par exemple un appareil d'éclairage, une caméra, un support d'écran plat, un écran de contrôle ou tout autre équipement adapté. Cette installation comporte un support 5 triangulaire portant trois bras articulés 1. Le support peut avoir toute autre forme adaptée et porter un nombre de bras différent. Sur cette figure, l'un des bras articulé 1 est illustré dans onze positions différentes de pivotement de ses premier et second montants 2, 3 et de sa pièce intermédiaire 4. Ces positions sont rendues possibles par les première et secondes liaisons pivot de premier et second axe A1, A2. Sur cette figure 5, les deux autres bras articulés 1 sont illustrés avec leurs premier et second montants 2, 3 dans l'alignement l'un de l'autre. Cette figure 5 met bien en évidence que, grâce à la pièce intermédiaire 4, le second montant 3 peut pivoter de 360° entre ses deux positions extrêmes, de part et d'autre du premier montant 2, tout en restant dans le même plan horizontal que le premier montant 2. Ainsi, le bras articulé 1 présente un encombrement vertical limité. Le pivotement de 360° est notamment rendu possible par l'épaisseur cumulée des demi-largeurs des premier et second montants 2, 3 qui est au plus égale, et de préférence inférieure, à l'entraxe entre le premier et le second axe A1, A2.

En référence en particulier à la figure 1, les premières, secondes plaques inférieures et supérieures 22, 23, 32, 33 de chaque premier et second montant 2, 3 sont en outre séparées par des entretoises cylindriques 7 dont les extrémités sont fixées par des vis d'entretoise 70 traversant les plaques inférieures et supérieures 22, 23, 32, 33 . De plus, les plaques inférieures 23, 33 des premier et second montants 2, 3 comportent un alésage inférieur 233, 333 autorisant le passage des extrémités inférieures des première et seconde tiges 41, 42. La tête de la vis intermédiaire 44 et le contour de cet alésage inférieur 233, 333 sont séparés d'une part par un empilage de rondelles freins 70 logées dans une bague 71 et d'autre part d'un disque frein 72 formant un moyen de friction permettant d'obtenir un pivotement du premier montant 2, du second montant 3 et de la pièce intermédiaire 4 plus fluide et régulier. Le disque frein 72 peut être réalisé en tout matériau adapté connu. Selon une variante de réalisation non représentée, le moyen de friction peut comporter un doigt latéral de friction disposé tangentiellement à une ou plusieurs extrémités de tige et remplissant la même fonction que le disque frein.

Chaque premier, second bras 2, 3 est équipé d'un premier, second carter de protection 91, 92 enveloppant chacun les extrémités des premières, secondes plaques inférieures et supérieures 22, 23, 32, 33 respectivement du premier, second montant 2, 3. Le premier carter de protection 91 est fixé au premier montant 2 et le second carter de protection 92 est fixé au second montant 3 tout en ménageant un espace suffisant entre le premier et le second montant 2, 3 pour l'engrènement des première et seconde portions dentées 510, 520. A cet effet, les extrémités des premier et second carters de protection 91, 92 sont arrondies pour ne pas interférer l'une avec l'autre lors des pivotements des premier, second montants 2, 3 et pièce intermédiaire 4. Ainsi, à tout moment, les premier et second roulements inférieurs 12, 14 et supérieurs 11, 13 sont protégés par les premier et second carters de protection 91, 92, quelle que soit l'orientation des premier et second montant 2, 3 et pièce intermédiaire 4 les uns par rapport aux autres.

Le bras articulé 1 comporte de plus un carter central de protection 8 porté par la pièce intermédiaire 4. Ce carter central de protection 8 présente une première et une seconde coque 81, 82 recouvrant respectivement les première et seconde couronnes 51, 52. Les première et seconde coques 81, 82 sont réunies par une languette de fixation 80 reçue dans le logement de fixation 47 de la pièce intermédiaire 4 pour assurer la fixation du carter central de protection 8 sur la pièce intermédiaire 4, par exemple au moyen d'une vis (non représentée). Ainsi, à tout moment, les première et seconde couronnes 51, 52 et en particulier les première et seconde portions dentées 510, 520, sont protégées par le carter central de protection 8, quelle que soit l'orientation des premier et second montant 2, 3 l'un par rapport à l'autre.

En référence à la figure 2, le second montant 3 peut être couplé à un troisième montant 9, articulé autour d'un troisième axe A3 autorisant son pivotement dans un plan vertical. Ce troisième montant 9 fait office de bras de compensation par rapport aux premier et second montants faisant office de bras d'extension. Ainsi, l'appareil électrique porté par l'extrémité libre de ce troisième montant 9 peut être positionné dans l'espace, horizontalement au moyen des premier et second montants 2, 3 et verticalement au moyen du troisième montant 9.

L'invention permet d'atteindre les objectifs précédemment mentionnés. En effet, tout en présentant un encombrement vertical limité, le bras articulé 1 permet le pivotement du second montant 3 d'un angle de 360° de part et d'autre du premier montant 2. De plus, quelle que soit la configuration des premier, second et troisième montants 2, 3, 9, le câble 6 traversant l'ouverture 45 de la pièce intermédiaire 4 est préservé de toute usure prématurée, il ne peut être coincé entre les pièces en mouvement et en particulier entre les première et seconde portions dentées 510, 520, et adopte des rayons de courbure prévu pour ne pas lui être préjudiciable.

Il va de soi que la présente invention ne saurait être limitée à la description qui précède d'un de ses modes de réalisation, susceptibles de subir quelques modifications sans pour autant sortir du cadre de l'invention.

## Revendications

1. Bras articulé (1) notamment pour appareil électrique, comportant au moins des premier et second montants (2, 3) coplanaires séparés par une pièce intermédiaire (4) avec laquelle chacun est relié respectivement par une première, seconde liaison pivot autorisant leurs pivotements relatifs autour de premier, second axes (A1, A2) parallèles entre eux, lesdits premier et second montants (2) comportant respectivement des première et seconde portions dentées (510), circulaires, pivotant autour desdits premier et second axes (A1, A2) et agencées pour engrener entre elles, ledit bras articulé (1) comportant un câble (6) passant dudit premier montant (2) audit second montant (3) jusqu'audit appareil électrique, **caractérisé en ce que** ladite pièce intermédiaire (4) est monobloc et présente un corps central (40) solidaire d'une première et d'une seconde tige (41, 42) définissant lesdits premier et second axes (A1, A2), lesdites première et seconde tiges (42) étant séparées par une ouverture (45) à contour fermé traversant le corps central (40), **en ce que** ledit câble (6) traverse ladite ouverture (45) de ladite pièce intermédiaire (4) monobloc de sorte que ledit câble (6) soit isolé desdites première et seconde portions dentées (510) par le contour fermé de ladite ouverture (45).

2. Bras articulé (1) selon la revendication 1, **caractérisé en ce que** ladite ouverture (45) présente une forme oblongue dont la longueur est orientée dudit premier audit second axe (A1, A2), perpendiculairement auxdits premier et second axes (A1, A2).

3. Bras articulé (1) selon au moins la revendication 1, **caractérisé en ce que** l'entraxe séparant lesdits premier et second axes (A1, A2) est au moins égal à la somme des demi-largeurs desdits premiers et second montants (2, 3) pour autoriser le pivotement dudit second montant (3) par rapport audit premier montants (2) entre deux positions extrêmes séparées d'un angle de 360°.

4. Bras articulé (1) selon la revendication 1, **caractérisé en ce que** chaque premier, second montant (2, 3) comporte respectivement une paire de premières, secondes portées femelles (220, 511, 320, 521) cylindriques et coaxiales entre elles, **en ce que** les extrémités desdites première et seconde tiges (41, 42) étant agencées pour dépasser de part et d'autre dudit corps central (40) et définir respectivement des premières et secondes portées mâles (410, 411, 420, 421) cylindriques et coaxiales entre elles et aptes à coopérer avec lesdites portées femelles (220, 511, 320, 521) pour définir lesdits premier et second axes (A1, A2).

5. Bras articulé (1) selon la revendication 4, **caractérisé en ce que** ladite première portion dentée (510) comporte l'une desdites premières portées femelles (511) et ladite seconde portion dentée (520) comporte l'une desdites secondes portées femelles (521).

6. Bras articulé (1) selon la revendication 4, **caractérisé en ce qu'il** comporte des premier, second roulements (11, 12, 13, 14) prévus entre chaque première, seconde portée mâles (410, 411, 420, 421) et la première, seconde portée cylindrique femelle (220, 511, 320, 521) correspondante.

7. Bras articulé (1) selon la revendication 6, **caractérisé en ce qu'il** comporte un premier carter de protection (8) solidaire dudit premier montant (2) et un second carter de protection (9) solidaire dudit second carter, chaque premier, second carter (8, 9) étant agencé pour entourer lesdits premier, second roulements (11, 12, 13, 14) et les isoler de l'extérieur dudit bras articulé (1).

8. Bras articulé (1) selon au moins la revendication 1, **caractérisé en ce qu'il** comporte un carter central de protection (8) solidaire de ladite pièce intermédiaire (4) et agencé pour entourer lesdites première et seconde portions dentées (510, 520) et les isoler de l'extérieur dudit bras articulé (1).

9. Bras articulé (1) selon au moins la revendication 1, **caractérisé en ce qu'il** comporte des moyens de friction prévus entre ladite pièce intermédiaire et au moins l'un desdits premier, second montants (2, 3), agencés pour freiner le pivotement respectivement dudit premier, second montants (2, 3) par rapport à ladite pièce intermédiaire de sorte à le rendre fluide et régulier.

10. Installation (100) pour appareil électrique comportant un support (5) portant au moins un bras articulé (1) dont l'extrémité libre est pourvue d'un appareil électrique, notamment un appareil d'éclairage, relié par un câble (6), **caractérisée en ce qu'**elle comporte un bras articulé (1) selon au moins l'une des revendications précédentes.
